# EUROPÄISCHE PATENTANMELDUNG

(11) **EP 1 983 426 A1**
(43) Veröffentlichungstag der Anmeldung: **22.10.2008**
(21) Anmeldenummer: 07007829.0
(22) Anmeldetag: 17.04.2007
(51) Int. Cl.: G06F 9/44, G05B 19/042

(54) **Automatisierte Visualisierung einer Auswahl von Simulationsdaten**

(71) Anmelder: SIEMENS AKTIENGESELLSCHAFT, 80333 München (DE)
(72) Erfinder: Brüll, Martin, 93092 Barbing (DE); Burger, Thomas, 93051 Regensburg (DE); Müller, Ralf, 93077 Bad Abbach (DE)

(57) **Zusammenfassung**

Es ist eine Aufgabe der vorliegenden Erfindung, die Visualisierung einer Auswahl von Daten, die bei einer Ausführung oder Simulation eines Funktionsmodells (10) auf einem Computersystem auftreten, zu vereinfachen, um damit insbesondere den Prozess einer Entwicklung bzw. Weiterentwicklung von Funktionalitäten eines Steuergeräts (z. B. Motorsteuergerät) effizienter gestalten zu können. Bei dem erfindungsgemäßen Verfahren ist eine auf dem Computersystem ablaufende Software dazu ausgebildet, anhand eines Regelwerks aus allen im Funktionsmodell (10) vorkommenden Daten einen Teil als die zu visualisierenden Daten automatisch auszuwählen. Mit der Erfindung ist eine durchgängige und automatisierte Lösung für die Definition, Auswahl und visuelle Anzeige der im Einzelfall benötigten Daten (Modellgrößen) ermöglicht.

## Beschreibung

Die vorliegende Erfindung betrifft die Ausführung oder Simulation eines Funktionsalgorithmus auf einem Computersystem. Der Begriff "Funktionsalgorithmus" soll hierbei in Abgrenzung zum rein mathematischen Begriff "Algorithmus" zum Ausdruck bringen, dass damit irgendwelche Funktionen in der realen Welt, also z. B. Steuerungs- oder Regelungsaufgaben erledigt werden. Insbesondere bei der Neuentwicklung oder Weiterentwicklung von Software, die einen solchen Funktionsalgorithmus bereitstellt, ist es wünschenswert, dass bei der Ausführung oder bei der Simulation des Funktionsalgorithmus auf einem Computersystem eine Visualisierung (z.B. Bildschirmanzeige) der dabei auftretenden Daten erfolgt.

Bei der Entwicklung bzw. Weiterentwicklung oder Modifikation von relativ komplexen softwareimplementierten Funktionsalgorithmen entsteht hierbei das Problem für den damit befassten Entwickler, dass bei der Ausführung oder Simulation eine von einem Menschen nicht mehr überschaubare Vielzahl von Daten auftritt. Um diesem Problem abzuhelfen, ist daher ein Verfahren zur Visualisierung lediglich einer Auswahl der auftretenden Daten wünschenswert.

Die vorliegende Erfindung betrifft insbesondere das Gebiet der Funktionsentwicklung für Steuergeräte, beispielsweise für Motorsteuergeräte zum Betreiben von Brennkraftmaschinen. Gerade bei der Ausführung oder Simulation diesbezüglicher Funktionsalgorithmen treten eine Vielzahl von Daten auf, die ein einzelner Entwickler nicht mehr zu überblicken vermag und aus praktischer Sicht für seine jeweilige Entwicklungsaufgabe gar nicht benötigt.

Motorsteuergeräte, wie sie in modernen Kraftfahrzeugen zur Steuerung einer Brennkraftmaschine und typischerweise auch zur Steuerung und/oder Regelung von weiteren elektrischen oder elektronischen Fahrzeugkomponenten eingesetzt werden, sind in den letzten Jahren zunehmend komplexer geworden. Die Einarbeitung in damit bereitgestellte Funktionen wie auch die Analyse von Problemen bei der Entwicklung und Weiterentwicklung von Motorsteuergeräten gestaltet sich dementsprechend aufwändig.

Im Rahmen der Funktionsentwicklung für mikroprozessorgesteuerte Steuergeräte findet oftmals die so genannte "Rapid Prototyping"-Methode Anwendung. Dabei wird ein simulationsfähiges Modell einer oder mehrerer Funktionalitäten, nachfolgend als Funktionsmodell bezeichnet, an einem Computersystem (z. B. PC) aufgebaut, das schließlich mit entsprechenden Werkzeugen (in der Regel Hardware- und Softwarekomponenten) so an ein bestehendes Steuergerät angekoppelt werden kann, dass es als Teil der Steuergerätefunktionalität arbeitet. Dies stellt dann einen so genannten Bypass dar.

Die betrachtete Funktionalität stellt somit einen Teil der gesamten Steuergerätefunktionalität dar und läuft entweder auf einem separaten und an das Steuergerät angeschlossenen Gerät (Mikrocontroller bzw. "Rapid Prototyping Unit") oder innerhalb des Steuergerätes selbst. Im ersteren Fall spricht man von externem Rapid Prototyping, wohingegen der zweite Fall üblicherweise als internes Rapid Prototyping bezeichnet wird.

Bei weniger komplexen Steuergerätefunktionalitäten kann auch die Gesamtheit der Funktionalitäten mittels Rapid-Prototyping-Werkzeugen betrieben werden (so genannter Fullpass).

Ein "Funktionsmodell" im Sinne der Erfindung ist die Basis bzw. eine spezielle Ausgestaltung eines "Funktionsalgorithmus". Ein Funktionsmodell ist aus einzelnen Modellteilen oder -elementen zusammengesetzt.

Mit den unterschiedlichen Begriffen "Ausführung" und "Simulation" soll zum Ausdruck gebracht werden, dass die Visualisierung einer Auswahl von Daten einerseits eher dem Zweck dienen kann, dass z. B. der Entwickler einer Steuergerätfunktionalität die Arbeitsweise und Brauchbarkeit des Funktionsalgorithmus bzw. des Funktionsmodells besser versteht bzw. beobachtet, und andererseits dem Zweck dienen kann, dass der Funktionsentwickler anhand der Visualisierung der betreffenden Daten sogleich Modifikationen am Funktionsalgorithmus vornimmt und deren Auswirkungen (wieder anhand der Visualisierung) untersucht oder überprüft. Bei einer Simulation eines Funktionsmodells kann der Funktionsentwickler beispielsweise einzelne Modellteile aus dem Modell herausnehmen, in das Modell einfügen, oder Verknüpfungen (Datenpfadelemente) modifizieren.

Für die isolierte Erstellung und Simulation (Test) eines Funktionsmodells auf einem Rechnersystem kann der Funktionsentwickler kommerziell erhältliche Softwarepakete (z. B. Matlab/Simulink/Stateflow, Solutions for Control, Ascet/Intecrio) nutzen. Derartige "Simulationstools" können z. B. eine graphische Bedienoberfläche aufweisen, mittels derer das Funktionsmodell aus einzelnen Modellteilen zusammengesetzt werden kann. Modellteile umfassen hierbei z. B. Funktionseinheiten (z. B. Addierer, Subtrahierer etc.) sowie Datenpfadelemente zum Verbinden der Funktionseinheiten.

Im Rahmen der Simulation des Funktionsmodells gestattet die Software ferner die Anbindung von Datengeneratoren zur Bereitstellung von Eingangsdaten des Funktionsmodells bzw. einzelner Funktionseinheiten sowie die Anbindung von Datenvisualisierungseinheiten an Datenausgängen von Funktionseinheiten, oder an einem Datenpfadelement, um die betreffenden Daten zu visualisieren. Der Begriff "Visualisierung" soll hierbei bedeuten, dass eine Repräsentation der betreffenden Daten mittels einer Ausgabeeinrichtung der Mensch-Maschine-Schnittstelle des Computersystems, also beispielsweise auf einem Bildschirm, ausgegeben wird.

Insbesondere für relativ komplexe Steuergerätefunktionalitäten, wie sie z. B. bei einem Motorsteuergerät für eine Brennkraftmaschine vorliegen, treten bei der Simulation des Funktionsmodells eine Vielzahl von Daten auf, bei denen man grob z. B. zwischen "Variablen" und "Parametern" unterscheiden kann.

Variablen des Funktionsmodells können z. B. Eingangsdaten und/oder Ausgangsdaten des Modells bzw. einzelner Modellteile sein. Ferner werden in dem Modell in der Regel Daten in Form von Zwischenergebnissen von Berechnungen (implementiert mittels der Funktionseinheiten) auftreten. Bei den Eingangsdaten und Ausgangsdaten kann es sich z. B. um Messsignale (Sensordaten) bzw. Steuersignale (z. B. zum Ansteuern von Aktoren) handeln.

Parameter des Funktionsmodells sind voreingestellte und veränderbare Größen und dienen zumeist als "Kalibrierungsdaten" zur größenmäßigen Anpassung von Funktionalitäten.

Beim Stand der Technik kann der Funktionsentwickler mit spezieller Bediensoftware bei der Simulation des Funktionsmodells (beispielsweise zur Durchführung von Messungen und/oder Kalibrationsaufgaben) auf entsprechende Daten zugreifen, sie zur Anzeige bringen und Parameter verstellen. Dafür muss der Entwickler anhand des Modells analysieren, welche Daten er benötigt, sie in dieser Bediensoftware händisch und somit sehr aufwändig definieren, welche Daten er in einem oder mehreren Fenstern einer Bildschirmausgabe angezeigt haben will und wie die in dieser Weise ausgewählten Daten innerhalb der Datenausgabe angeordnet werden sollen.

Bei komplexen Funktionsmodellen sind in der Regel sehr viele Variablen und Parameter enthalten. Bei den bekannten Softwaretools zur Erstellung und Simulation von Funktionsmodellen werden zumeist nicht alle in der Praxis vom Funktionsentwickler benötigten Daten auch als messbare, d. h. händisch zur Visualisierung auswählbare Daten erzeugt. Auf der anderen Seite werden von solcher Standardsoftware für viele Daten Visualisierungsmöglichkeiten (d. h. eigens hierfür vorgesehene Speicherstellen) angelegt, die für den Funktionsentwickler im konkreten Anwendungsfall wertlos sein können.

Für den Funktionsentwicklung stellt die händische Definition bzw. Auswahl der für eine Visualisierung benötigten Daten in der Bediensoftware eine zeitaufwändige Tätigkeit dar. Außerdem können bei jeder vorgenommenen Funktionsänderung auch Datenänderungen eintreten, die eine erneute Definition bzw. Überprüfung der vorherigen Definition hinsichtlich der Visualisierung notwendig macht, was einen weiteren Zeitaufwand darstellt und fehleranfällig ist. Insgesamt ergibt sich bei den bekannten Verfahren zur Visualisierung einer Auswahl von Daten aus der Gesamtheit der vorkommenden Daten ein großer Effizienzverlust beim Funktionsentwicklungsprozess.

Es ist eine Aufgabe der vorliegenden Erfindung, die Visualisierung einer Auswahl von Daten, die bei einer Ausführung oder Simulation eines Funktionsalgorithmus auftreten, zu vereinfachen, um damit insbesondere z. B. den Prozess einer Entwicklung bzw. Weiterentwicklung von Funktionalitäten eines Steuergeräts effizienter gestalten zu können.

Die Grundidee der Erfindung besteht darin, eine automatisierte Lösung für die Definition bzw. Auswahl der zu visualisierenden Daten anzugeben.

Erfindungsgemäß ist ein Verfahren zur Visualisierung einer Auswahl von Daten vorgesehen, die bei einer Ausführung oder Simulation eines Funktionsalgorithmus auf einem Computersystem mittels einer darauf ablaufenden Software auftreten, wobei die Software dazu ausgebildet ist, anhand eines Regelwerks aus allen im Funktionsalgorithmus vorkommenden Daten einen Teil als die zu visualisierenden Daten automatisch auszuwählen.

Das "Regelwerk" ist gewissermaßen wieder ein Algorithmus, der selbständig die Auswahl der zu visualisierenden Daten vornimmt. Dieser Algorithmus ist jedoch nicht mit dem "Funktionsalgorithmus" zu verwechseln, in welchem diese Daten auftreten.

Mit der Erfindung ist eine durchgängige und automatisierte Lösung für die Definition, Auswahl und visuelle Anzeige der im Einzelfall benötigten Daten (Modellgrößen) ermöglicht.

Der Kern der Erfindung besteht darin, dass im Funktionsmodell die vom Funktionsentwickler benötigten Daten (z. B. repräsentativ für physikalische Größen) auf einfache Weise definiert werden und schließlich auch in einfacher Weise automatisiert, nämlich anhand eines softwareimplementierten Regelwerks (Algorithmus) zur Anzeige gebracht werden können. Ein Funkionsmodell selbst kann die zentrale Quelle für die Auswahl der zu visualisierenden Daten darstellen. Alternativ kann auch eine andere Quelle, insbesondere zentrale Quelle (für alle auftretenden Daten) für diejenigen Informationen vorgesehen sein, anhand derer das Regelwerk die Datenauswahl vornimmt.

Eine händische und somit sehr aufwändige Definition bzw. Auswahl von zu visualisierenden Daten, wie dies im Stand der Technik vorgesehen ist, kann gemäß der Erfindung vorteilhaft entfallen.

In einer Weiterbildung der Erfindung ist vorgesehen, dass das Regelwerk auch die Positionierung der einzelnen zu visualisierenden Daten definiert. Beispielsweise können Anzeigeelemente zur Anzeige der ausgewählten Daten automatisch von der Software aufgebaut werden. Dabei können auch vorgehaltene Layouts verwendet werden, die bevorzugt in Abhängigkeit der benötigten Daten ausgesucht und konfiguriert werden. Alternativ oder zusätzlich können gemäß des Regelwerks auch Layouts in Abhängigkeit von den benötigten Daten aufgebaut werden.

Die Informationen über die benötigten Daten können hierbei z. B. aktiv vom Funktionsmodell an die Software (z. B. Bediensoftware) übermittelt werden oder von der Software abgerufen werden). (Z. B. aus dem Modell selbst oder aus einer anderen Informationsquelle)

Die Positionierung der einzelnen zu visualisierenden Daten kann z. B. sowohl die Positionierung innerhalb eines Datenausgabefensters einer graphischen Ausgabeoberfläche des verwendeten Computersystems als auch die Anordnung mehrerer solcher Fenster umfassen.

In einer bevorzugten Ausführungsform ist vorgesehen, dass die Software für eine Veränderbarkeit des Regelwerks durch einen Bediener des Computersystems ausgebildet ist. Falls das Regelwerk auch die Positionierung der einzelnen zu visualisierenden Daten definiert, so kann sich die Veränderbarkeit des Regelwerks auch auf die entsprechenden "Positionierungsregeln" beziehen. Die Veränderbarkeit des Regelwerks besitzt z. B. den besonderen Vorteil, dass verschiedene Bediener, die z. B. mit verschiedenen Aufgaben im Rahmen der Funktionsentwicklung betraut sind, in einfacher Weise jeweils eine individuelle Auswahl von Daten ein und desselben Funktionsalgorithmus bzw. Funktionsmodells visualisieren lassen können. Der Funktionsalgorithmus als solcher muss hierbei vom betreffenden Bediener nicht verändert werden.

Die Definition derjenigen Daten, die überhaupt durch das Regelwerk als zu visualisierende Daten auswählbar sind, erfolgt bevorzugt bereits im Funktionsmodell selbst. In diesem Fall kann mittels der Veränderbarkeit des Regelwerks vorteilhaft z. B. eine weitere einschränkende Auswahl individuell von einem Benutzer vorgenommen werden.

In einer Weiterbildung ist vorgesehen, dass während des Aufbaus von Anzeigeelementen an der betreffenden Ausgabeeinrichtung vom Bediener Eingaben verlangt werden, die den Umfang der zu visualisierenden Daten einschränkt und/oder die Anordnung der Anzeigeelemente (z. B. Bildschirmfenster) beeinflusst. Alternativ oder zusätzlich können dazu auch im Computersystem vorhandene Konfigurationsdateien zum Aufbau der Anzeigeelemente ausgelesen werden.

In einer Weiterbildung der Erfindung ist vorgesehen, dass das Regelwerk bei der Auswahl und/oder der Positionierung der zu visualisierenden Daten auch die aktuellen Datenwerte berücksichtigt. Hierbei kann z. B. vorgesehen sein, dass einzelne Daten nur dann visualisiert werden, wenn deren aktueller Wert bestimmte, vom Bediener vorgegebene Kriterien erfüllt. Ein solches Kriterium kann z. B. sein, dass der betreffende Datenwert eine vorgegebene Schwelle überschreitet bzw. unterschreitet. Eine oder mehrere solcher Schwellen können z. B. im Rahmen einer Veränderung des Regelwerks durch einen Bediener eingebbar sein.

In einer Ausführungsform ist vorgesehen, dass der Funktionsalgorithmus auf einem Funktionsmodell basiert und dass dieses Funktionsmodell für alle im Funktionsmodell vorkommenden Daten jeweilige Datenkennzeichen beinhaltet und das Regelwerk diese Datenkennzeichen bei der Auswahl und/oder der Positionierung der zu visualisierenden Daten berücksichtigt.

In einem einfachen Fall bestimmt das Datenkennzeichen, ob das betreffende Datum zu visualisieren ist oder nicht. Diese Ausführungsform ist in der Praxis jedoch zumeist deshalb nachteilig, weil für eine gewünschte andere Auswahl von zu visualisierenden Daten die entsprechenden Datenkennzeichen, also der Funktionsalgorithmus bzw. das zugehörige das Funktionsmodell selbst verändert werden muss.

Zur Beseitigung dieses Nachteils ist z. B. eine Ausführungsform interessant, bei welcher die Datenkennzeichen der einzelnen im Funktionsmodell auftretenden Daten nicht unmittelbar angeben, ob die Daten zu visualisieren sind oder nicht, sondern lediglich eine "Datenart" der betreffenden Daten angeben, anhand derer sodann das softwareimplementierte Regelwerk über die Frage der Visualisierung dieser Daten entscheidet. Damit ergibt sich vorteilhaft eine größere Flexibilität des erfindungsgemäßen Visualisierungsverfahrens, insbesondere wenn das Regelwerk durch den Bediener des Computersystems veränderbar ist, so dass jeder Bediener seine individuellen Visualisierungskriterien einsetzen kann, ohne das Funktionsmodell als solches zu verändern.

Beispielsweise könnte ein erster Bediener, der sich für die physikalisch-technische Brauchbarkeit des Funktionsmodells interessiert, durch eine geeignete Anpassung des Regelwerks z. B. die relevanten Eingangsdaten und Ausgangsdaten visualisieren lassen, wohingegen ein zweiter Bediener, der einen Fehler im Funktionsmodell lokalisieren möchte, sich hierfür auch Zwischenergebnisse von funktionsmodellinternen Berechnungen visualisieren lassen kann. Für einen Bediener, der im Rahmen der Funktionsentwicklung eine Kalibrierung von Funktionseinheiten bzw. der damit realisierten Funktionalitäten vornehmen möchte, kann alternativ oder zusätzlich zur Visualisierung von bestimmten Variablen auch eine Visualisierung von Parametern des Funktionsmodells interessant sein.

Allen diesen unterschiedlichsten Anforderungen der einzelnen Bediener kann besonders vorteilhaft dadurch Rechnung getragen werden, dass die Datenkennzeichen lediglich eine Information über die Art der Daten enthalten, die Auswahl zwecks Visualisierung der Daten (und gegebenenfalls Positionierung der Daten) jedoch ausschließlich von dem Regelwerk durchgeführt wird, welches bevorzugt jedoch veränderbar ist.

In einer Ausführungsform ist vorgesehen, dass als Datenkennzeichen der Umstand gewertet wird, ob die betreffenden Daten Eingangsdaten oder Ausgangsdaten einer im Funktionsalgorithmus bzw. in einem zugrundeliegenden Funktionsmodell verwendeten Funktion sind, die einer bestimmten Funktionsklasse angehört.

Für die Definition von "Funktionsklassen" gibt es in der Praxis vielfältige Möglichkeiten.

Beispielsweise könnten Funktionseinheiten des Funktionsmodells, an welche nicht unmittelbar Eingangsdaten des Modells geliefert werden und welche nicht unmittelbar Ausgangsdaten des Modells liefern, eine eigene Funktionsklasse "Zwischenberechnungen" bilden.

Dem gegenüber könnten Funktionseinheiten, welche mit Eingangsdaten des Modells versorgt werden oder Ausgangsdaten des Modells liefern, eigenen Funktionsklassen "Eingangsfunktionen" bzw. "Ausgangsfunktionen" zugeordnet werden.

Ferner könnten Funktionseinheiten jeweils einer oder mehrerer Funktionsklassen zugeordnet werden, welche eine physikalisch-technische Relevanz der eingehenden oder ausgehenden Daten angeben (z. B. "relevant für Kalibrierung", "relevant für Zündzeitpunktsberechnung", "relevant für Bremsen-Antiblockierfunktion" etc.). Derartige übergreifende Kriterien bzw. Attribute können als Datenkennzeichnung sehr hilfreich sein, um den Bedienern des Computersystems eine entsprechende individuelle Anpassung des Regelwerks anhand dieser Datenkennzeichen zu ermöglichen. So kann z. B. ein Bediener durch eine entsprechende Veränderung des Regelwerks sich generell nur Kalibrationsdaten oder aber z. B. nur die zu einer bestimmten Teilfunktionalität (z. B. Einspritzsteuerung, Bremsensteuerung, Getriebesteuerung etc.) gehörenden Daten bei der Simulation des Funktionsmodells visualisieren lassen.

In einer Ausführungsform ist vorgesehen, dass Datenkennzeichen durch Parsen von im Funktionsmodell verwendeten Funktionsnamen oder Datennamen gewonnen werden, die von einem Bediener bei der Erstellung des Funktionsmodells vergeben wurden. Durch diese Maßnahme wird ein besonders hoher Grad an Flexibilität des Verfahrens erzielt. Vorteilhaft kann ein Funktionsentwickler bereits während der Erstellung des Funktionsmodells auf dem Computersystem die im Modell verwendeten Funktionsnamen und/oder Datennamen (der Datenpfadelemente) gemäß einer vorgegebenen Konvention vergeben (z. B. Großschreibung, Kleinschreibung, bestimmter Präfix und/oder Suffix, bestimmter Namensbestandteil etc.), um damit gewissermaßen den Grundstein für eine einfache automatisierte Auswahl der zu visualisierenden Daten zu legen.

Gemäß einer Ausführungsform ist vorgesehen, dass Datenkennzeichen durch eine Datenart gebildet sind. Wie es oben bereits erwähnt wurde, lassen sich Daten z. B. in "Variable" und "Parameter" einteilen, was bereits einen Aspekt der betreffenden Datenart darstellt. Darüber hinaus kann die Datenart alternativ oder zusätzlich weitere Aspekte beinhalten. Für Variablen kann die Datenart beispielsweise angeben, ob es sich um ein Eingangssignal des Funktionsmodells, ein Ausgangssignal des Funktionsmodells oder um modellinterne Zwischenergebnisse handelt. Auch könnte die Datenart bzw. ein auf der Datenart basierendes Datenkennzeichen sich auf physikalisch-technische Bedeutungsinhalte (z. B. "Sensorsignal", "Messsignal", "Steuersignal", "Analogsignal", "Digitalsignal", "Berechnungszwischenergebnissignal" etc.) angeben. Auch kann die Datenart sich alternativ oder zusätzlich auf die Zugehörigkeit zu einer bestimmten Funktionsklasse (Eingangs- und/oder Ausgangsdaten einer zur Funktionsklasse zugehörigen Funktionseinheit) beziehen. Eine Funktionsklasse kann hierbei z. B. durch mathematische Eigenschaften der zugehörigen Funktionen definiert werden, wie oben bereits erwähnt durch die Anordnung der Funktionseinheit innerhalb des Funktionsmodells definiert werden (z. B. "Eingangsfunktion"), oder auch durch vorgegebene Eigenschaften des vom Ersteller des Funktionsmodells vergebenen Funktionsnamens definiert sein.

In einer Ausführungsform ist vorgesehen, dass das Funktionsmodell zur Bereitstellung von Datenkennzeichen einen eigens hierfür vorgesehenen Datenkennzeichenblock beinhaltet. Gemäß dieser Ausführung erfolgt eine Kennzeichnung von zur Visualisierung vorgesehenen Daten über spezielle zusätzliche Elemente bzw. Blöcke ("Selection Block"). Insbesondere kann in das Funktionsmodell z. B. ein zusätzlicher Datenkennzeichenblock bei der Erstellung des Modells eingefügt werden, der über spezielle (durch die Software definierte) Einstellmöglichkeiten verfügt. Insbesondere könnte eine Einstellung dahingehend vorgesehen sein, ob die betreffenden Daten visualisiert werden sollen oder nicht. Alternativ oder zusätzlich könnte ein Datenkennzeichenblock dazu dienen, für alle im Modell auftretenden Daten eine Datenart anzugeben bzw. zu spezifizieren. Ein solcher Datenkennzeichenblock kann auch außerhalb des Funktionsalgorithmus bzw. Funktionsmodells vorgesehen sein, insbesondere z. B. als eine "zentrale Informationsquelle", die vom Regelwerk bei der Auswahl der zu visualisierenden Daten genutzt wird. In diesem Fall könnten den einzelnen Daten bzw. Datenpfadelementen eines Funktionsmodells unmittelbar "anhaftende" Datenkennzeichen vorgesehen sein, die lediglich softwaretechnisch einen Verweis bzw. eine Referenz darstellen, die zu einer bestimmten Stelle innerhalb der zentralen Informationsquelle verweist, in welcher dann letztlich diejenigen Informationen aufgefunden werden, die vom Regelwerk bei der Datenauswahl benötigt werden. In einer lediglich beispielhaft zu verstehenden Ausführungsform können die Einstellmöglichkeiten an dem Datenkennzeichenblock des Modells mittels einer graphischen Bedienungsoberfläche realisiert sein, beispielsweise über auswählbare Markierungen innerhalb einer Liste der im Modell enthaltenen Daten.

Die Erfindung wird nachfolgend anhand von Ausführungsbeispielen mit Bezug auf die beigefügten Zeichnungen weiter beschrieben. Es stellen dar:
- Fig. 1: ein Funktionsmodell samt angebundener Datengeneratoren und Datenvisualisierungseinheit,
- Fig. 2: eine graphische Darstellung einer im Funktionsmodell enthaltenen Funktion,
- Fig. 3: eine graphische Darstellung einer weiteren im Funktionsmodell enthaltenen Funktion, und
- Fig. 4: eine Bildschirmanzeige mit Datenvisualisierungsfenstern.

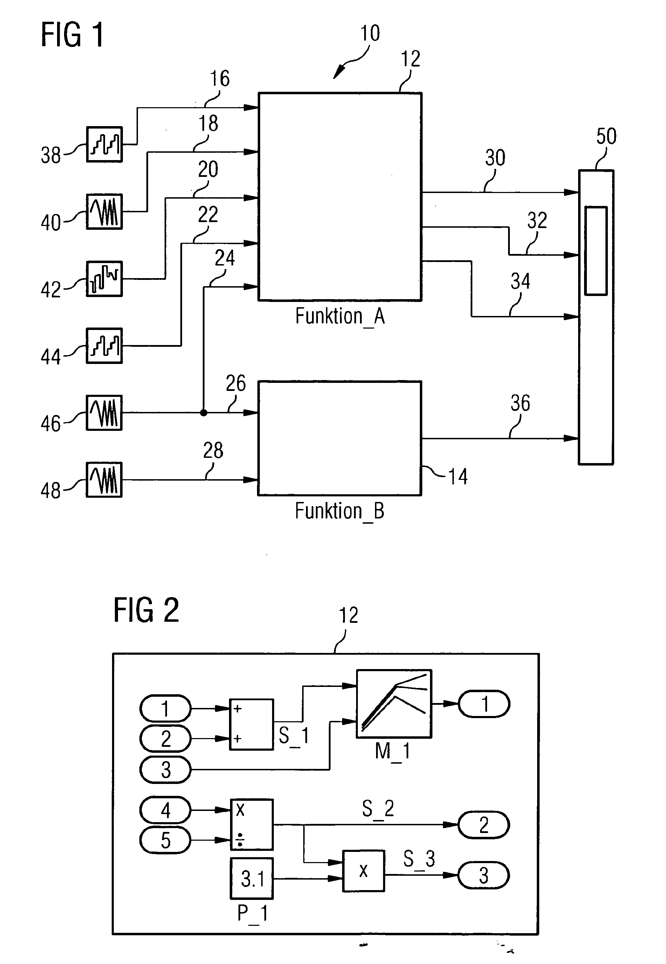

Fig. 1 zeigt beispielhaft ein Funktionsmodell 10, das zwei Funktionen bzw. Funktionseinheiten 12 und 14 umfasst.

Das Funktionsmodell 10 umfasst ferner Datenpfadelemente 16 bis 36, welche in der dargestellten Weise zu Dateneingängen der Funktionen 12 und 14 hinführen bzw. von Datenausgängen dieser Funktionen wegführen.

Im dargestellten Ausführungsbeispiel besitzt die Funktion 12 fünf Dateneingänge und drei Datenausgänge, wohingegen die Funktion 14 zwei Dateneingänge und einen Datenausgang besitzt.

Eine Simulationsfähigkeit des Modells 10 ergibt sich durch die dargestellte Anbindung einerseits von Datengeneratoren 38 bis 48 zur Bereitstellung von Eingangsdaten des Modells 10 über die Datenpfadelemente 16 bis 24 und 28 und andererseits einer Datenvisualisierungseinheit 50, an welcher die ausgangsseitigen Datenpfadelemente 30 bis 36 münden.

Das Datenpfadelement 26 ist wie dargestellt ein vom Datenpfadelement 24 abgezweigter Datenpfad. Damit wird wie dargestellt bewirkt, dass ein vom Datengenerator 46 generiertes Funktionseingangsdatum sowohl (über den Pfad 24) an einen Dateneingang der Funktion 12 als auch (über den Pfad 26) an einen Dateneingang der Funktion 14 geführt wird.

Funktionsmodelle wie das dargestellte Funktionsmodell 10 können im Stand der Technik durch kommerziell erhältliche Modellierungs- und Simulationssoftware aufgebaut und wie beispielhaft in Fig. 1 ersichtlich graphisch dargestellt werden. An dieser Stelle ist anzumerken, dass das beispielhafte Funktionsmodell 10 vergleichsweise einfach aufgebaut ist. In der Praxis, etwa bei der Erstellung und Simulation von Funktionsmodellen für einzelne oder alle Funktionalitäten eines mikroprozessorgesteuerten Steuergeräts für eine Brennkraftmaschine, sind zumeist sehr viel mehr Funktionen und Datenpfade als in Fig. 1 dargestellt vorhanden.

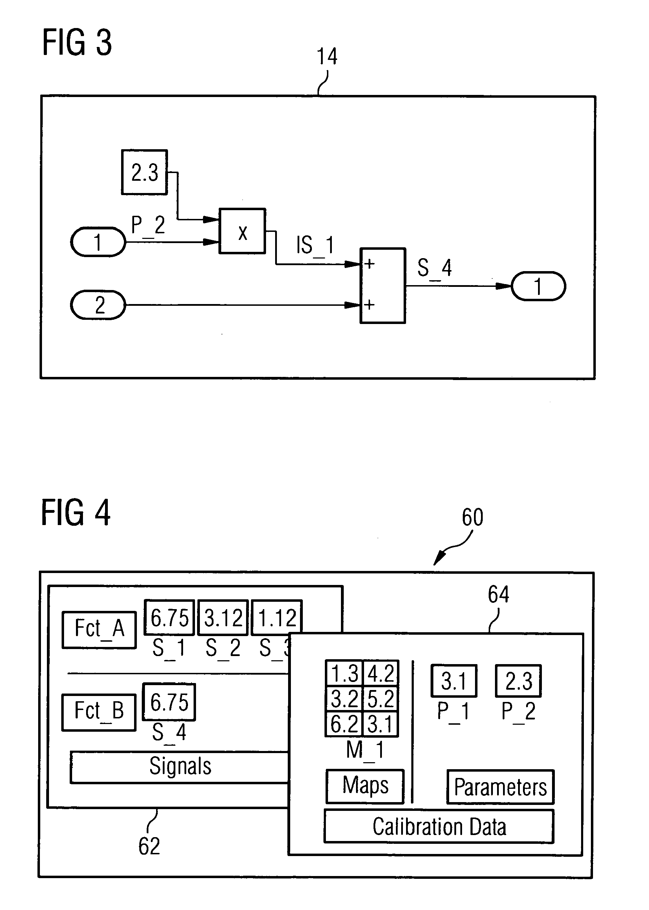

Die Fig. 2 und 3 zeigen die interne Struktur der Funktionseinheiten 12 (Fig. 2) und 14 (Fig 3).

Aus diesen Darstellungen ist ersichtlich, dass jede der Funktionen 12 und 14 wiederum, ähnlich dem Gesamtmodell 10, aus mehreren Funktionseinheiten gebildet ist, die durch funktionsinterne Datenpfadelemente verknüpft sind. Das Funktionsmodell 10 ist demnach vorteilhaft aus Modulen (hier: Funktionseinheiten 12 und 14) aufgebaut, welche bei der Erstellung des Funktionsmodells vorteilhaft aus einem Sortiment an solchen Modulen herangezogen werden können. Dies besitzt z. B. den Vorteil, dass häufig benötigte Funktionen innerhalb der Modellierungs- und Simulationssoftware in einer Modulbibliothek vorgehalten werden können, auf die der Benutzer komfortabel zugreifen kann, um daraus ein spezielles Funktionsmodell zu erstellen. Der Benutzer kann hierbei auch neue Funktionseinheiten über eine graphische Bedienungsoberfläche definieren und in die Bibliothek integrieren.

Wenngleich anhand der selbsterklärenden Darstellungen in den Fig. 1 bis 3 für den Fachmann klar ist, wie die Modellausgangssignale an den Pfaden 30 bis 36 aus den Modelleingangssignalen an den Pfaden 16 bis 24 und 28 (erzeugt durch die Datengeneratoren 38 bis 48) berechnet werden, so sei lediglich beispielhaft die Berechnung des über den Datenpfad 30 ausgegebenen Datums nachfolgend detailliert erläutert:

Das am Pfad 30 ausgegebene Datum ist das Ausgangsdatum eines Parameter-Kennfelds M_1. Dieses Parameter-Kennfeld M_1 wird eingangsseitig mit zwei Variablen versorgt. Eine erste Variable ist in Fig. 2 mit S_1 bezeichnet und wird aus einer Addition derjenigen Daten erhalten, die von den Datengeneratoren 38 und 40 über die Datenpfade 16 bzw. 18 dem Modell 10 zugeführt werden (vgl. Fig. 1). Die zweite Eingangsvariable für das Parameter-Kennfeld M_1 wird durch das Datum gebildet, welches von dem Datengenerator 42 erzeugt und über den Datenpfad 20 zugeführt wird.

Die Fig. 2 und 3 stellen die Inhalte der beiden Funktionsmodellteile 12 und 14 des Funktionsmodells 10 dar.

Eine Besonderheit des Funktionsmodells 10 bzw. der Modellteile 12 und 14, aus denen das Funktionsmodell 10 gebildet ist, ist die Zuordenbarkeit von willkürlich vergebenen Namen für sämtliche Teile des Modells 10 sowie sämtliche Teile der Funktionseinheiten 12 und 14.

So besitzen im dargestellten Beispiel die Funktionseinheiten 12 und 14 die Funktionsnamen "Funktion_A" bzw. "Funktion_B". Wenngleich dies in Fig. 1 nicht explizit dargestellt ist, so gestattet die hier verwendete Modellierungs- und Simulationssoftware auch die Vergabe von Namen für die über die Datenpfadelemente 16 bis 36 geführten Daten. Wie es aus den Fig. 2 und 3 ersichtlich ist, gestattet die Software ferner die Vergabe von Namen für sämtliche Teile der Funktionen (hier: Funktionen 12 und 14). So ist beispielsweise "M_1" der Name des bereits erwähnten, einen Teil der Funktion 12 bildenden Parameter-Kennfelds. Das an einem ersten Dateneingang dieses Kennfelds zugeführte Datum ist, wie in Fig. 2 ersichtlich, mit einem Datennamen "S_1" bezeichnet. Das zweite eingangsseitige Datum für das Kennfeld besitzt im dargestellten Beispiel keinen Datennamen.

Die vom Ersteller vergebenen Namen für Funktionseinheiten und Daten besitzen den Vorteil, dass der Ersteller einen besseren Überblick über die Bedeutung der einzelnen Funktionen und/oder Daten behalten kann. Im dargestellten Beispiel wurden beispielsweise mit dem Präfix "S" oder "IS" beginnende Namen für Signale (S) bzw. Zwischensignale (IS; durch eine Berechnung an einem oder mehreren Signalen oder Zwischensignalen erhalten) verwendet. Dem gegenüber wurden zur Bezeichnung von Parametern Datennamen verwendet, die mit dem Präfix "P" beginnen. Parameter-Kennfelder beginnen mit dem Präfix "M". Durch eine solche Konvention bei der Namensvergabe kann in intuitiver Weise eine Datenart der betreffenden Daten bzw. eine Funktionsart der betreffenden Funktionseinheiten klar zum Ausdruck gebracht werden.

Im Rahmen der vorliegenden Erfindung dienen die vergebenen Namen der Modellteile jedoch keineswegs nur zum besseren Verständnis des Erstellers oder eines Bearbeiters des Funktionsmodells 10, sondern werden in einem automatisierten Visualisierungsverfahren von der Modellierungs- und Simulationssoftware genutzt.

Diese Software erzeugt bei der Simulation des Funktionsmodells 10 eine visuelle Darstellung einer Auswahl von Daten, die im Funktionsmodell auftreten.

Fig. 4 zeigt beispielhaft eine von der verwendeten Software erzeugte Visualisierung in Form einer Bildschirmausgabe 60 des verwendeten Computersystems.

Die Bildschirmausgabe umfasst im dargestellten Beispiel zwei Ausgabefenster 62 und 64, wobei im Fenster 62 die im Funktionsmodell 10 auftretenden Signale visualisiert werden, wohingegen das Fenster 64 zur Visualisierung von Kalibrierungsdaten dient.

Im vorliegenden Beispiel ist die Namensgebung für die Teile des Funktionsmodells 10 mitbestimmend dafür, welche Größen überhaupt und gegebenenfalls in welchen der Ausgabefenster 62 und 64 visualisiert werden. Innerhalb der Software ist ein Regelwerk hinterlegt, welches anhand vorbestimmter Kriterien bestimmt, ob und in welcher Form bzw. Anordnung ein jeweiliges Datum zur Anzeige gebracht wird.

Im vorliegenden Beispiel bestimmt das softwareimplementierte Regelwerk beispielsweise, dass sämtliche im Funktionsmodell 10 vorkommenden Daten, deren Datennamen mit dem Präfix "S" beginnen, im Ausgabefenster 62 visualisiert werden, wohingegen Modellteile bzw. Daten, deren Name mit dem Präfix "M" oder "P" beginnen, im Ausgabefenster 64 visualisiert werden.

Durch das Regelwerk kann in einfacher Weise auch eine Positionierung der zu visualisierenden Daten in Abhängigkeit von der Namensgebung realisiert werden, was zu einem übersichtlichen, gut definierten Layout der Visualisierungsausgabe 60 führt.

Im dargestellten Beispiel bestimmt das Regelwerk sowohl die getrennte Darstellung von Signalen und Kalibrationsdaten (Parameter, Kennfelder) als auch eine entsprechende Gruppierung innerhalb der jeweiligen Ausgabefenster 62 und 64. Darüber hinaus wird die Information berücksichtigt, in welcher Funktion (hier: Funktion_A oder Funktion_B) des Funktionsmodells 10 ein Datum (als Eingabedatum oder Ausgabedatum) definiert worden ist. Außerdem wurde als Regel hinterlegt, dass Zwischenwerte wie das Datum "IS_1" nicht zur Anzeige gebracht werden.

Die Bediensoftware ist somit vorteilhaft in der Lage, auf Basis der im Funktionsmodell vorliegenden Informationen (insbesondere z. B. der vergebenen Namen) und dem hinterlegten Regelwerk automatisiert die von einem Benutzer des Computersystems individuell benötigten Daten zu visualisieren und in vorgegebenen Anzeigebereichen anzuordnen. Alternativ könnte der Aufbau des Visualisierungslayouts auch von einem separaten Tooling erledigt werden, das der eigentlichen Bediensoftware dann fertig aufgebaute Visualisierungslayouts zur Verfügung stellt.

Eine vorteilhafte weitere Eigenschaft der auf dem Computersystem ablaufenden Software besteht darin, dass diese für eine Veränderbarkeit des beim Visualisierungsverfahren zugrunde gelegten Regelwerks ausgelegt ist. Damit kann ein Bediener des Computersystems beispielsweise das Regelwerk seinen individuellen Bedürfnissen anpassen, ohne hierfür das Funktionsmodell 10 verändern zu müssen. Beispielsweise kann ein Bediener durch eine einfach vorzunehmende Anpassung des Regelwerks festlegen, dass nurmehr Kalibrierungsdaten oder nurmehr Daten betreffend eine bestimmte physikalisch-technische Funktionalität (z. B. Kraftstoffeinspritzberechnungsdaten) visualisiert werden.

Bei dem beschriebenen Ausführungsbeispiel berücksichtigt das Regelwerk für die Auswahl und/oder die Positionierung der zu visualisierenden Daten jeweilige Datenkennzeichen, die durch Parsen der verwendeten Funktionsnamen und Dateinamen gewonnen werden.

Wenngleich dies bei dem einfachen Ausführungsbeispiel nicht explizit erläutert wurde, so können solche Datenkennzeichen alternativ oder bevorzugt zusätzlich auch in anderer Weise definiert bzw. mitdefiniert sein. Auch in diesem Fall sind bevorzugt sämtliche Datenkennzeichen bereits im Funktionsmodell enthalten, so dass vorteilhaft verschiedene Benutzer ein und desselben Funktionsmodells durch eine einfache Anpassung des Regelwerks letztlich die zu visualisierenden Daten und deren Positionierung in einer graphischen Ausgabe bestimmen können. Datenkennzeichen können auch unabhängig von den vergebenen Namen für einzelne Daten oder einzelne Funktionseinheiten von der Software ermittelt und berücksichtigt werden. Schließlich kommt alternativ oder zusätzlich in Betracht, dass ein Funktionsmodell wie das in Fig. 1 dargestellte Funktionsmodell 10 auch noch einen eigens zur Bereitstellung von Datenkennzeichen vorgesehenen Datenkennzeichenblock enthält.

Zusammenfassend wird mit der Erfindung ein vorteilhaftes und universell einsetzbares Verfahren zur Visualisierung einer Auswahl von Daten bereitgestellt, die bei einer Ausführung oder Simulation eines Funktionsalgorithmus, insbesondere Funktionsmodells auf einem Computersystem auftreten. Die Auswahl der zu visualisierenden Daten aus der Gesamtheit der vorkommenden Daten erfolgt automatisiert anhand eines Regelwerks. Damit kann eine durchgängige und effiziente Lösung insbesondere für die Entwicklung oder Weiterentwicklung von Steuergeräten geschaffen werden, wobei die gewünschte Auswahl von Daten letztlich auf Informationen beruht, die vollständig im Funktionsmodell selbst enthalten bzw. zum Funktionsmodell gehörig sein können. Darunter können auch Dateien und/oder Informationen fallen, die aus dem betreffenden Funktionsmodell abgeleitet werden bzw. durch spezielle "Datenkennzeichen" referenziert werden.

Datenkennzeichen, die in softwaregesteuerter Weise für die Frage der Visualisierung auswertbar sind, können sich aus der Verwendung von bestimmten Funktionseinheiten oder Datenpfadelementen, insbesondere deren mathematischen Eigenschaften oder deren Zugehörigkeit zu einer bestimmten physikalischtechnischen Funktionalität oder deren Namen ergeben. Werden beispielsweise bei der Integration von Funktionseinheiten und damit verbundener Datenpfadelemente, die sich auf Kalibrierungsfunktionalitäten beziehen, spezifische "Kalibrierungsblöcke" verwendet (z. B. definiert durch deren Namen oder andere spezifische Eigenschaften), so kann ein Benutzer durch eine entsprechende Anpassung des Regelwerks oder durch Auswahl einer vordefinierten Einstellung des Regelwerks in einfacher Weise festlegen, dass sämtliche mit Kalibrierungsaufgaben zusammenhängenden Daten visualisiert werden. Alternativ kann z. B. auch durch bestimmte, an jeder einzelnen Funktionseinheit bzw. jedem einzelnen Datenpfadelement vornehmbare Einstellungen eindeutig gekennzeichnet werden, ob das mit dem Modellteil dargestellte Datum für eine Visualisierung zur Verfügung stehen soll.

Auch unabhängig von dem speziellen Anwendungsfall des Rapid Prototyping kann die Erfindung beim allgemeinen Anwendungsfall Kalibration eingesetzt werden. Damit kann ein Funktionsentwickler z. B. bereits wichtige effizienzsteigernde Vorarbeiten für die spätere Kalibrationsphase der Steuergerätentwicklung bzw. -weiterentwicklung leisten. Ferner kann die Erfindung auch bei der Erzeugung von Modelldokumentationen verwendet werden. In diesem Fall kann die Auswahl von zu visualisierenden Daten und deren Positionierung unmittelbar als Teil einer zu erstellenden technischen Dokumentation des betreffenden Funktionsmodells verwendet werden.

In einer vorteilhaften Ausführungsform können für die Visualisierung interessante Daten durch bestimmte Datenparameter oder Datennamen gekennzeichnet sein, die gemäß einer von der Software berücksichtigten Konvention vergeben werden. Eine Namensvergabe allein oder in Kombination mit einer Prüfung auf bestimmte Namensbestandteile oder -zusammensetzungen kann genauso wie das Setzen bestimmter Datenparameter als eindeutige Kennzeichnung von Daten betrachtet werden, die für eine Visualisierung interessant sind bzw. gemäß aktueller Einstellung des Regelwerks tatsächlich zur Anzeige gebracht werden sollen.

Durch den Einsatz der Erfindung ergeben sich in der Praxis insbesondere z. B. folgende Vorteile:
- Sehr hohe Effizienz für den Funktionsentwickler bei der Durchführung von Rapid Prototyping. Ein zeitraubender manueller Aufbau von Layouts betreffend die Visualisierung bestimmter Daten kann entfallen. Nach einem Neuaufbau eines Funktionsmodells oder nach Änderungen im Funktionsmodell kann ein Bediener ohne Zeitverlust die Funktionalität sofort kalibrieren und Messungen durchführen.
- Ermöglichte Durchgängigkeit des Verfahrens. Das Funktionsmodell kann die einzige, zentrale Quelle für Datendefinitionen sein und der automatisierte Aufbau von Layouts betreffend die Visualisierung kann durch definierte Regelwerke strukturiert und standardisiert sein.
- Fehlervermeidung: Fehler wie zum Beispiel das Anzeigen von falschen Daten (aufgrund von Namensverwechslungen) oder das Vergessen der Visualisierung von wichtigen Daten können durch die Durchgängigkeit und die weitestgehende Automatisierbarkeit des Verfahrens vermieden werden.

## Patentansprüche

1. Verfahren zur Visualisierung einer Auswahl von Daten, die bei einer Ausführung oder Simulation eines Funktionsalgorithmus (10) auf einem Computersystem mittels einer darauf ablaufenden Software auftreten, wobei die Software dazu ausgebildet ist, anhand eines Regelwerks aus allen im Funktionsalgorithmus (10) vorkommenden Daten einen Teil als die zu visualisierenden Daten automatisch auszuwählen.

2. Verfahren nach Anspruch 1, wobei das Regelwerk auch die Positionierung der einzelnen zu visualisierenden Daten definiert.

3. Verfahren nach einem der vorangehenden Ansprüche, wobei die Software für eine Veränderbarkeit des Regelwerks durch einen Bediener des Computersystems ausgebildet ist.

4. Verfahren nach einem der vorangehenden Ansprüche, wobei das Regelwerk bei der Auswahl und/oder der Positionierung der zu visualisierenden Daten auch die aktuellen Datenwerte berücksichtigt.

5. Verfahren nach einem der vorangehenden Ansprüche, wobei der Funktionsalgorithmus auf einem Funktionsmodell basiert und das Funktionsmodell (10) für alle im Funktionsmodell (10) vorkommenden Daten jeweilige Datenkennzeichen beinhaltet und das Regelwerk diese Datenkennzeichen bei der Auswahl und/oder der Positionierung der zu visualisierenden Daten berücksichtigt.

6. Verfahren nach einem der vorangehenden Ansprüche, wobei als vom Regelwerk berücksichtigte Datenkennzeichen der Umstand gewertet wird, ob die betreffenden Daten Eingangsdaten oder Ausgangsdaten einer im Funktionsalgorithmus (10) verwendeten Funktion (12, 14) sind, die einer bestimmten Funktionsklasse angehört.

7. Verfahren nach einem der vorangehenden Ansprüche, wobei vom Regelwerk berücksichtigte Datenkennzeichen durch Parsen von im Funktionsalgorithmus (10) verwendeten Funktionsnamen oder Datennamen gewonnen werden, die von einem Bediener bei der Erstellung des Funktionsalgorithmus (10) vergeben wurden.

8. Verfahren nach einem der vorangehenden Ansprüche, wobei vom Regelwerk berücksichtigte Datenkennzeichen durch eine Datenart gebildet sind.

9. Verfahren nach einem der vorangehenden Ansprüche, wobei der Funktionsalgorithmus (10) zur Bereitstellung von Datenkennzeichen einen eigens hierfür vorgesehenen Datenkennzeichenblock beinhaltet.

10. Verfahren nach einem der vorangehenden Ansprüche, wobei vom Regelwerk berücksichtigte Datenkennzeichen von Referenzen gebildet sind, die auf bestimmte Stellen in einer zentralen Informationsquelle verweisen.

11. Computerprogrammprodukt mit auf einem maschinenlesbaren Träger gespeicherten Programmcodemitteln zur Ausführung eines Verfahrens nach einem der vorangehenden Ansprüche auf einem Computersystem.
